Europäisches Patentamt

(19) European Patent Office

Office européen des brevets

(11) Publication number: **0 144 188**
A2

(12) **EUROPEAN PATENT APPLICATION**

(21) Application number: **84307997.1**

(22) Date of filing: **19.11.84**

(51) Int. Cl.⁴: **H 04 N 1/46**

(30) Priority: **07.12.83 US 559132**

(43) Date of publication of application:
**12.06.85 Bulletin 85/24**

(84) Designated Contracting States:
**DE FR GB**

(71) Applicant: **XEROX CORPORATION**
**Xerox Square - 020**
**Rochester New York 14644(US)**

(72) Inventor: **Rhodes, Warren L.**
**1941 E. Braeburn Road**
**Altadena California 91001(US)**

(74) Representative: **Weatherald, Keith Baynes et al,**
**European Patent Attorney Rank Xerox Limited Patent**
**Department 338 Euston Road**
**London NW1 3BH(GB)**

(54) **Copy density correction system.**

(57) A process for automatically correcting the tone and color reproduction characteristics of a color reproduction system is described. First, a test target containing a plurality of color patches of known or desired chromaticity coordinates and luminance is copied. Each patch on the copy is then analyzed by a colorimeter to generate sets of chromaticity coordinates for each patch. These are compared against the desired chromaticity coordinates for each color patch, and a set of tone reproduction corrections are generated and stored in a look-up table for each colorant in the color reproduction system.

FIG. 2

EP 0 144 188 A2

This invention relates to the color reproduction characteristics of any color reproduction method and, more specifically, provides for the automatic analysis of a trial copy of a test pattern and the generation of corrections which are required to achieve a desired result.

The output of any reproduction process, a copier, for example, almost never achieves the optimum reproduction. With black and white originals, especially text, the reproduction quality is usually good enough to satisfy the user, or the operator can adjust the contrast or density to improve the results.

Similarly, in color printers or color copiers where the images are generated in a computer, bar charts or graphs, for example, precise specification of the color and density of the print is not as important as it is when the image is the reproduction of a photograph or artist rendering. For example, a bar chart which reproduced blue-green might be as effective as one which reproduced blue.

Additionally, where corrections need to be made, the operator should be able to decide the kind, direction and amount of correction since the colors tend to be pure, are limited in number, and typically exist in blocks.

The most difficult case arises when the original is complex, such as a color photograph or painting and where the color reproduction method uses three, four or more colorants to produce a reproduction. In this case, small shifts of color and density result in large perceived differences of copy quality.

The tone reproduction characteristics of photography and of all graphic arts or photomechanical color reproduction processes are typically not ideal. It is difficult and complicated to produce ideal tone reproduction by conventional methods. Further, the lack of copy quality is very difficult for the operator to correct since a visible color shift in the colors that the operator can perceive (red, green and blue) is frequently a complex function of the colors the process uses (yellow, magenta, cyan and black). Conventional masking, which is color

0144188

correction for unwanted absorption of typical cyan, magenta and yellow colorants, is not sufficient to produce good color reproduction. The tone reproduction of the process and reproduction curves of the individual colorants, cyan, magenta, yellow (and black, if used) need to be precisely shaped. If more than four colorants are used, all reproduction curves must be correctly shaped. In photography, the equivalent neutral density of the cyan, magenta and yellow sensitometric curves are made to track each other. In typical printing processes, the reproduction curves of the individual colorants do not track each other.

It is likely that this adjustment procedure will be iterative and time consuming, and therefore not performed as often as necessary to maintain copy quality at a sufficiently high level. What is required, then, is a method of rapidly generating accurate corrections for a color reproduction process.

The color and tone corrections in this invention incorporate a table look-up method for controlling the tone reproduction characteristics of each of the three, four, or more, colorants of a reproduction process. The amounts of cyan, magenta, yellow and black are controlled by the digitized values obtained by scanning an original, which are, in turn, modified by a table look-up which can be either software or hardware.

This invention performs this function by reproducing a sample of a calibrated test target, by analyzing the reproduction with a colorimeter, and by using a computer to compare sample results with desired results to generate the values necessary to correct the look-up table of the particular printer or copier.

The test target can be a plurality of grey test patches, test patches of any one color, or a sampling of a variety of colors. In the usual case, the target is gray. In the described embodiment, each target typically comprises forty-nine rectangular patches of one color at various densities on an 8½" x 11" white background.

A sample reproduction of the target is made, which inevitably differs to some degree in color and density from the desired result. This copy is analyzed by mounting it on a table driven by

0144188

stepping motors which locates each color area, in turn, in view of the colorimeter. The colorimeter then generates three readings per patch which describes the color of each patch on the reproduction.

This table of forty-nine sets of three readings is then input to a computer which generates forty-nine sets of three, four or more correction values corresponding to each of the colorants, cyan, magenta, yellow, and perhaps black, for the look-up tables of the reproducing device, one for each of forty-nine points. These values tend to have a point to point variation and can be manipulated into a smooth curve by using any commerically available curve fitting program. In the alternative, an unsmooth curve, or even steps, can be constructed instead of a smooth or fitted curve to enhance one or several colors, or to achieve some other effect. This set of correction curves can then be used to modify the tables in any way that is appropriate to the reproducing system in use, such as a color printer or copier, to compensate for all the variables which are affecting the device when the sample is taken.

In this described embodiment, the printer scans the original with three lasers, red, green and blue, producing a digital record of multiple points along each scan line. Three outputs generate amounts of three output colors, yellow, magenta and cyan. Scanned, digitized and stored images can also be used. Because of non-linearities in the system, the scanner outputs cannot be used directly to drive the three identical color outputs when high quality color reproduction is desired. In addition, of course, a black color output can also be generated (or any other color that may be useful in the specific application). One typical process adjusts black density to one half of the density of the lightest of the other three colors. To accomplish these transformations, each elemental point on an original for each laser output is digitized into the form of an eight-bit word which can characterize one of 256 color levels. This eight-bit word is passed through a masking type color corrector and then used in an eight-bit look-up table to generate a second eight-bit word which is used to drive the color copier output. There is thus a transformation curve stored in the look-up table comprising digital values which are required to produce the correct amounts of colorants to be printed.

This invention will now be more specifically described in connection with the following drawings, in which:

Figure 1A is a curve showing the desired and actual tone reproductions. The difference between the two curves is the reproduction error in density for grey patches in a typical system. This example shows only the error in density. In addition to the errors in density, each of the reproduced patches may be colored instead of the expected neutral grey.

Figure 1B is a graph showing hypothetical curves stored in the look-up table before and after corrections. This table converts laser sensor outputs to copier outputs for one colorant.

Figure 2 is a schematic drawing of the entire system.

Figure 3 is a set of equations mathematically determining the amount of correction required for cyan, magenta and yellow colorants in a 3-color process in terms of the chromaticity and density differences between the colors obtained in a trial print and the colors specified.

Figure 4 is an example of the locus of the chromaticity coordinates $(x, y)$ of the color desired (1) and the locus of the color produced in a trial reproduction (2). Each arrow indicates the direction an increase in the amount of a given colorant (cyan, magenta or yellow) would move the locus of the reproduced color.

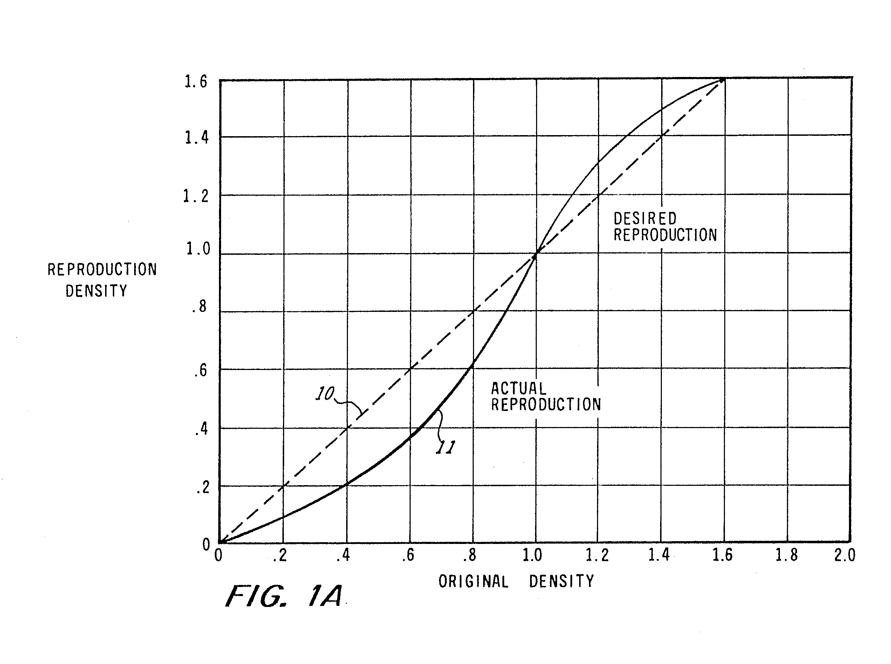

Figure 1A is a tone reproduction curve, which is reproduction density as a function of original density, for a set of grey patches. In a linear system it would be a straight line 10. In a typical real system without correction, there would be a non-linearity, as shown by the curved line 11.

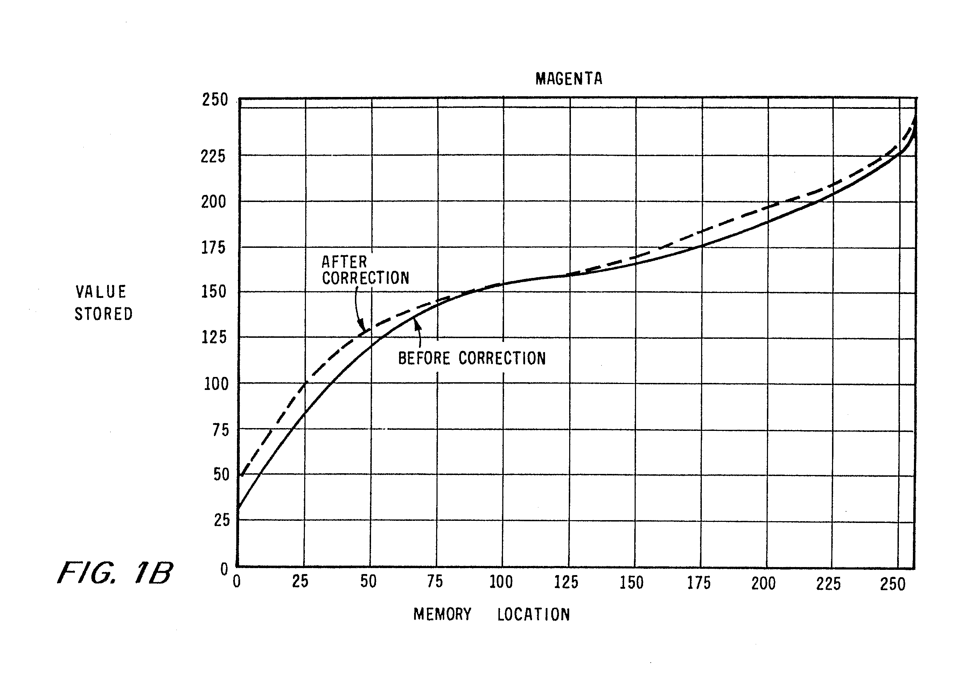

Figure 1B is a graph of values stored in the look-up table for one colorant in a three color system.

The solid line shows a typical curve before correction and the dotted line is the curve after correction. Both vertical and horizontal axes are numbered from 0 to 255 with each numerical intersection point representing the contents of a memory location in a 256 word table look-up memory. For a numerical example, if the measured density of the original is digitized at a level of 100, the contents of location 100 will be output (in this case, a value of about 155) to the copier for the magenta channel. If the system is calibrated correctly, the final copy will have the identical densities and colors as the original, assuming that is what is wanted. The function of this invention, then, is to generate automatically corrections to these curves. Said corrections are represented in Figure 1B by the vertical distance between the two curves. The actual correction comprises changing the contents of most or all of the look-up table locations by one or more.

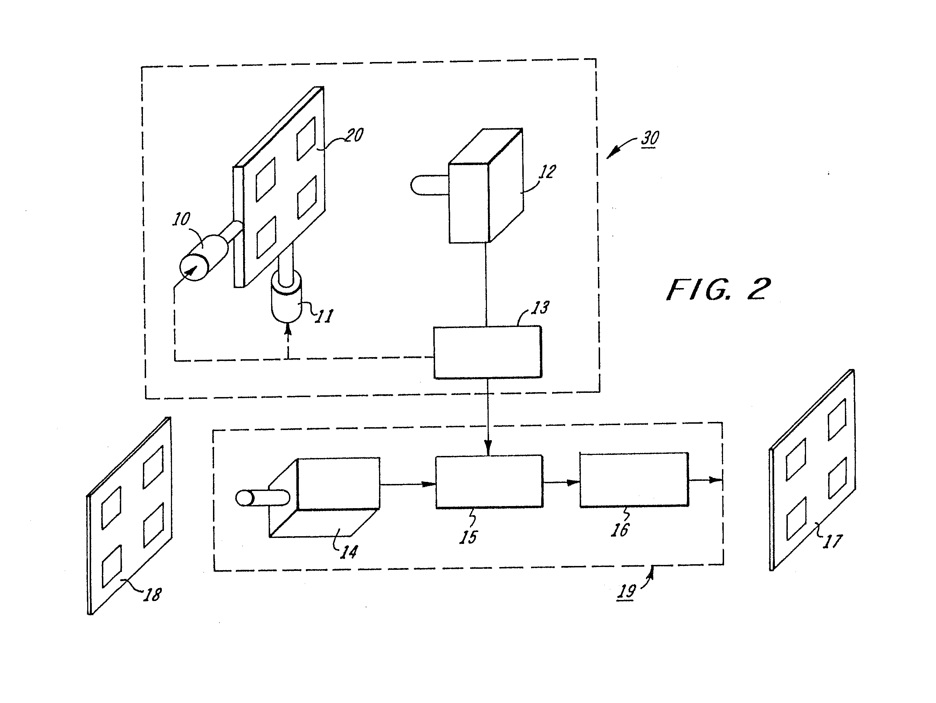

One example of this process and apparatus is shown schematically in Figure 2. As shown, the analyzer 30 comprises an x, y positioner for the color target, a colorimeter 12 and a computer 13. The copier 19 itself comprises the digitizer 14, the electronics including look-up tables 15 and the printer 16. The digitizer 14, electronics 15, and printer 16 are shown as parts of a copier 1a, but may also be stand-alone units. An original 18 test target is placed on the platen of the copier 19 and is scanned with three color channels 14. The digital outputs of the digitizer channels 14 are transformed by the look-up table 15 into signals to drive the printer 16 to produce a copy 17. The original 18 is then mounted on a table 20 driven in two dimensions by stepping motors 10, 11 to position each patch, in turn, in view of a colorimeter 12. The chromaticity and density readings for each of the 49 patches of the original are stored in the computer 13. The original is then replaced by the copy 17 and the process repeated. The entire set of chromaticity and density readings for the original and copy is then converted by the computer 13 into a set of corrections which are used to update the look-up table 15, so that on the next iteration, the copy 17 will be a more accurate reproduction of the original test target 18. The original need be used only on the first iteration to load the computer with the original values. In the alternative, these original values may be loaded into the computer directly in digital form for a color match, or any other specified result.

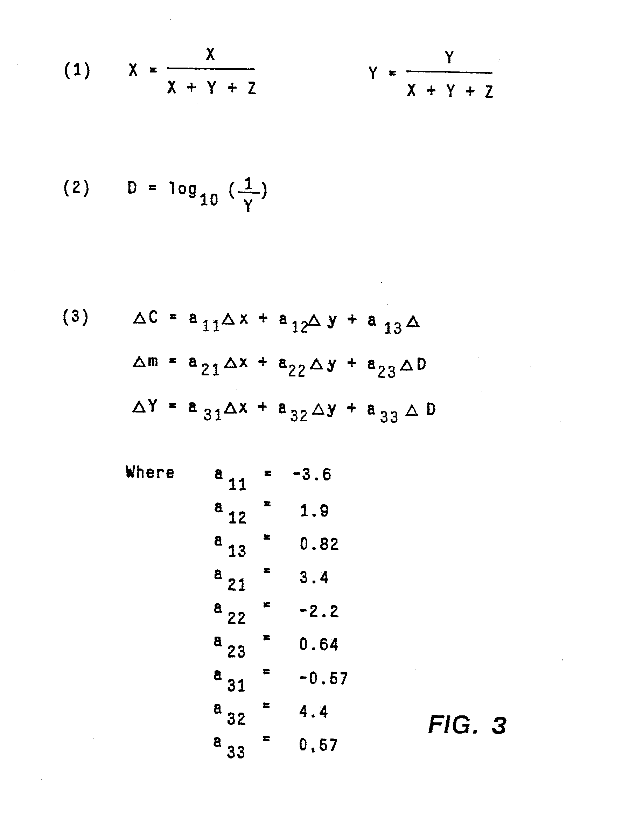

The colorimeter assumed in this discussion is a Macbeth Model 1500 manufactured by Kollmorgan Corporation, the outputs of which are three readings corresponding to the red, green and blue components of the color sample, and designated as X, Y and Z of Figure 3. The conversation to trichromatic coordinates, designated as x, y and D, is next accomplished, preferably by computer, according to equations (1) and (2) of Figure 3. The coefficients for equation (3) are determined empirically.

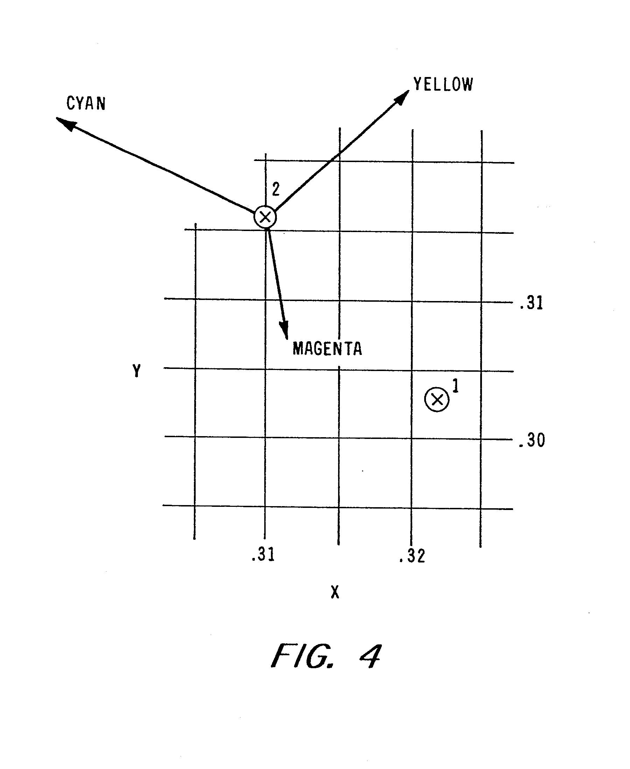

The operator or computer now has stored for comparison the desired trichromatic coordinates and density of the original target and the corresponding values of the copy, and can calculate the differences and display them on a standard chart of trichromatic values, such as the CIE chromaticity diagram of which Figure 4 is a part. The X (1) is the locus of the desired color while the circled X (2) is the color of the copy. In this example, $\Delta y$ is approximately - 0.013 and $\Delta x$ is approximately 0.012. Next, a $\Delta D$ value is computed by calculating the value D using equation (2) of Figure 3 for the original and copy, and subtracting.

Now the actual changes in the table look-up values for magenta, cyan and yellow can be calculated using equations (3) of Figure 3.

As described above, there are actually forty-nine test patches on each target, and there is a certain random variation in these values, so that more consistent and accurate corrections are probable if a curve fitting is performed on these values before they are actually applied to the copier.

This discussion assumes that the copy should be as close in value as possible to the original, but colors shifts can also be easily produced using this system. For example, the computer may be instructed that the original test target colors are darker than they actually are. In the alternative, a substitute test target having colors that are lighter than they should be is used. In either case, the computer will generate corrections to produce a darker output. This technique can be used to vary either color, density or contrast, and may be used either to produce a good print from a poor original, or to achieve a special effect. The method can also be used for negative-to-positive processes.

Of course, as a subset of this invention, the above system could be used in one channel to adjust a black and white copier.

This system can be used to correct for any inaccuracy of the system. In fact, the operator doesn't have to know or understand what the error source is, the system itself will automatically correct for it.

This procedure will probably be used when the system is first turned on, or when some change in the system is made. At these times, there is an increased probability that the system will be out of adjustment and that this procedure will be necessary.

This description has assumed 8-bit tables but tables of any size can be used. Possible applications of this process can be used in copiers, printers, lithography, gravure, ink jet, thermal printers, electrography, xerography (one embodiment being described herein) and photography.

CLAIMS:

1.    A copy density correction system for adjusting the copy quality of a printing system comprising:

means 12 for determining the density of a printed patch,

means 13 responsive to the determined density for calculating the difference between the determined and desired density, and

means 15 for adjusting the print density of the printing system so that the difference between the determined and desired density will be reduced.

2.    The correction system of Claim 1 wherein said printing system uses one colorant.

3.    The correction system of Claim 1 wherein said means for determining also determines the color of the printed patch, wherein said means for calculating calculates the difference between the determined and desired color and density, wherein said printing system uses two or more colorants, and wherein said means for adjusting adjusts the density of said colorants.

4.    A copy density correction system for adjusting the copy quality of a printing system comprising:

means 12 for determining the density of each of a plurality of printed patches which are various densities of the same color,

means 13 responsive to the determined densities for calculating the difference between the determined and desired density over a range of densities, and

means 15 for adjusting the print density over the range of densities so that the differences between the determined and desired densities will be reduced.

5.    The correction system of Claim 4 wherein said printing system uses one colorant.

6. The correction system of Claim 4 wherein said means for determining also determines the color of said printed patches, wherein said means for calculating also calculates the differences between the determined and desired colors, wherein said printing system uses a plurality of colorants, and wherein said means for adjusting adjusts the amounts of colorants used so that the differences between the determined and desired colors and densities will be reduced.

7. A copy density correction system for adjusting the copy quality of a printing system which uses a plurality of colorants comprising:

means for determining the color and density of each of a plurality of printed patches which vary in color and density,

means responsive to the determined densities and colors for calculating the differences between the determined and desired densities and colors over a range of colors and densities, and

means responsive to said determined densities and colors for adjusting the print density for each colorant over its range of densities so that the differences between the determined and desired densities and colors will be reduced.

8. The color correction system of Claims 1, 2, 3, 4, 5, 6 or 7 wherein predetermined values representative of the desired colors or densities are loaded into said means for calculating.

9. The color correction system of Claims 1, 2, 3, 4, 5, 6 or 7 wherein said printing system further comprises a reproduction scanner for reproducing printed patches from original patches, and wherein said means for determining further determines the color and density of said original patches corresponding to said printed patches to determine the desired color and density values.

10. The color correction system of Claims 4, 5, 6 or 7 wherein, for each printer colorant, the number of individual differences are formed into a smooth fitted curve before being used to adjust the print density over its entire range.

11.    The color correction system of Claims 4, 5, 6 or 7 wherein, for each printer colorant, the number of individual differences are formed into a curve of any arbitrary function covering the entire range of densities before being used to adjust the print density.

12.    The color correction system of Claims 1, 2, 3, 4, 5, 6 or 7 wherein said printing system uses a look-up table to convert the reproduction scanner outputs or the predetermined values into amounts of colorants used to print said printed patches, and wherein said means for adjusting adjusts the print density for each colorant by varying the values in said table.

FIG. 1A

0144188

MAGENTA

VALUE STORED (y-axis): 250, 225, 200, 175, 150, 125, 100, 75, 50, 25, 0

MEMORY LOCATION (x-axis): 0, 25, 50, 75, 100, 125, 150, 175, 200, 225, 250

AFTER CORRECTION

BEFORE CORRECTION

FIG. 1B

FIG. 2

(1) $\quad X = \dfrac{X}{X + Y + Z} \qquad Y = \dfrac{Y}{X + Y + Z}$

(2) $\quad D = \log_{10} \left( \dfrac{1}{Y} \right)$

(3) $\quad \Delta C = a_{11} \Delta x + a_{12} \Delta y + a_{13} \Delta$

$\qquad \Delta m = a_{21} \Delta x + a_{22} \Delta y + a_{23} \Delta D$

$\qquad \Delta Y = a_{31} \Delta x + a_{32} \Delta y + a_{33} \Delta D$

Where $\quad a_{11} = -3.6$

$\qquad\qquad a_{12} = 1.9$

$\qquad\qquad a_{13} = 0.82$

$\qquad\qquad a_{21} = 3.4$

$\qquad\qquad a_{22} = -2.2$

$\qquad\qquad a_{23} = 0.64$

$\qquad\qquad a_{31} = -0.57$

$\qquad\qquad a_{32} = 4.4$

$\qquad\qquad a_{33} = 0.57$

FIG. 3

*FIG. 4*